# EUROPEAN PATENT SPECIFICATION

(11) **EP 3 012 380 B1**
(45) Date of publication and mention of the grant of the patent: **04.11.2020**
(21) Application number: 15397536.2
(22) Date of filing: 21.10.2015
(51) Int. Cl.: E04D 3/36, E04D 13/16, E04F 13/08, E04B 1/76, F16B 5/02, F16B 13/00, E04D 15/04

(54) **FASTENER, METHOD OF FASTENING INSULATION BY MEANS OF THE FASTENER AND A FASTENING SYSTEM**
BEFESTIGUNGSELEMENT, VERFAHREN ZUR ISOLIERUNGSBEFESTIGUNG MIT DEM BEFESTIGUNGSELEMENT UND BEFESTIGUNGSSYSTEM
ÉLÉMENT DE FIXATION, PROCÉDÉ DE FIXATION D'ISOLATION AU MOYEN DE L'ÉLÉMENT DE FIXATION ET SYSTÈME DE FIXATION

(30) Priority: 23.10.2014 FI 20145931
(43) Date of publication of application: 27.04.2016
(73) Proprietor: VILPE Oy, 65610 Mustasaari (FI); Saint-Gobain Rakennustuotteet Oy, 05801 Hyvinkää (FI)
(72) Inventor: SAIKKONEN, Eero, 65370 VAASA (FI); KARHUNEN, Ari, 05400 JOKELA (FI)
(74) Representative: Laine IP Oy

(56) References cited:
- EP-A1- 0 189 569
- EP-A2- 1 857 607
- EP-A2- 2 666 919
- FI-B- 63 986
- FR-A1- 2 832 089
- US-A1- 2005 055 927

## Description

### Field of the invention

The present invention relates to fasteners. Specifically, the invention relates to a fastener, a method of installing insulation by means of the fastener and a fastening system.

### Background of the invention

The energy efficiency of buildings can be improved by adding heat insulation outside the actual frame. A continuous heat insulation layer located outside the frame interrupts structure-penetrating thermal bridges caused by frame structures. The physical operational reliability is improved when the frame of the structure is separated from the ambient air by means of a heat insulation layer located outside the frame. The mineral insulations commonly used as heat insulation outside the frame are readily permeable to water vapour, whereby the structure has a good ability to dry through the insulation layer. Pin spacers are commonly used for fastening the mineral insulation. A nail or pin spacer is a fastener having pins attached to a circular part. A pin spacer prevents compression of insulation when fastening facade structures and it also transmits the loads exerted on the facade to frame structures.

Installing insulation with pin spacers is a multi-step task and often more than one installer is required for carrying out the installation. Additionally, pin spacers do not endure being stepped on, if pin spacers are installed in large continuous surfaces in horizontal structures and the installation requires moving on top of them. Moving on the pin spacers can be necessary e.g. during production of factory-made building elements. The aim of the present invention is to solve the above-mentioned problems.

US patent 6,308,483 discloses a fastener for insulation materials, the fastener comprising a body with a recess for receiving a tool, a flat hat portion and a tip portion through which a screw penetrates, engaging the substrate. A plate with serrated bottom surface and having a central hole can be provided under the hat portion for biting into the insulation material so that the plate does not rotate as the hat portion is rotated when rotating the fastener. The fastener is shorter than the thickness of the insulation, i.e. its point does not reach the substrate but the screw pulls the fastener into contact with the upper surface of the insulation. Another fastener is known from US 2005/0055927.

European patent application 2 455 562 discloses a screw fastener for a shell covered heat insulation plate. A support sleeve is fastened around the screw being fastened to the substrate, the sleeve being provided with cutting edges at the end of the point of the screw. The outer surface of the support sleeve is provided with grooves allowing the insulation material to leave when the support sleeve cuttingly penetrates the insulation material. The length of the fastener is shorter than the thickness of the insulation plate. Thus, its purpose is to sink into the insulation and to act on the inner shell of the insulation plate.

### General description of the invention

This invention improves the installability of insulation on frame structures, whereby it is easier and faster to install insulation materials. The solution according to the present invention discloses a method according to claim 7 or 8 for fastening the insulation to the frame by means of a spacer, the characteristic feature of the method being that it comprises an outer, cylindrical sleeve portion and an inner sleeve portion arranged concentrically with the outer sleeve portion, whereby a space is formed between the outer and inner sleeve portions. The fastener comprises an outer end designed to set at essentially the same level with the outer surface of the insulation, and an inner end, designed to set at essentially the same level with the lower surface of the insulation, preferably so that he length of the fastener essentially corresponds with the thickness of the insulation. The outer ends of the outer sleeve portion and the inner portion are connected by a plate-like collar portion. The edge of the inner end of the outer sleeve portion is preferably formed to be cutting so that the fastener can bore into the insulation material as it is rotated.

When the fastener is fastened, a screw and an installation tool are installed into the hole, i.e. inner space in the center of the sleeve portion, the external shape of the installation tool being adapted to correspond with the shape of the hole along at least a part of the height of the hole, the screw is rotated using the installation tool, whereby the fastener rotates simultaneously, boring into the insulation, and as the screw is rotated into the frame, it pulls the inner end of the fastener to contact the frame. This allows directing the fastening to directly contact the frame. Due to the installation tool it is not necessary to fasten the screws by hand, but various rotation tools can be used.

A bushing can be installed inside the fastener, whereby the installation tool is used for rotating a screw inside the bushing, whereby the fastener and the screw rotate simultaneously, boring into the insulation with the bushing, and as the screw is rotated into the frame, it pulls the sleeve and the bushing downwards, fastening the screw finally in place, after which the fastener is rotated until its inner end contacts the frame. Using the additional bushing, the fastener can be attached even to thick insulation without the use of long screws.

The invention also comprises a fastener according to claim 1 for fastening insulation to the frame, the characteristic feature of the fastener being that it comprises an outer, cylindrical sleeve portion and an inner sleeve portion arranged concentrically with the outer sleeve portion, whereby a space is formed between the outer and inner sleeve portions. The fastener comprises an outer end designed to set at essentially the same level with the outer surface of the insulation, and an inner end, designed to set at essentially the same level with the lower surface of the insulation, so that he length of the fastener essentially corresponds with the thickness of the insulation. The outer ends of the outer sleeve portion and the inner portion are connected by a plate-like collar portion preventing the removal of the insulation from the substrate. The edge of the inner end of the outer sleeve portion is preferably formed to be cutting so that the fastener can bore into the insulation material as it is rotated. Preferably the cutting edge comprises teeth, the teeth cutting a clean hole of correct size when the sleeve is rotated.

Additionally a bushing can be installed in the hole of the fastener, into which bushing the screw can be installed.

The hole of the inner sleeve portion, i.e. the inner space, is square or hexagonal in shape for at least a portion of the length of the fastener. Preferably the length of the fastener corresponds with the height of the insulation to be installed, whereby the collar of the fastener suitably remains on the surface of the insulation, maintaining the insulation in place.

The invention additionally comprises a fastening system according to claim 9 for attaching the insulation to the frame, the characterizing feature of the system being that the fastening system comprises a fastener for fastening the insulation to the frame, a screw and an installation tool. The characteristic feature of the fastener is that it comprises an outer, cylindrical sleeve portion and an inner sleeve portion arranged concentrically with the outer sleeve portion, whereby a space is formed between the outer and inner sleeve portions. The fastener comprises an outer end designed to at essentially the same level with the outer surface of the insulation, and an inner end, designed to set at essentially the same level with the lower surface of the insulation, so that he length of the fastener essentially corresponds with the thickness of the insulation. The outer ends of the outer sleeve portion and the inner portion are connected by a plate-like collar portion preventing the removal of the insulation from the substrate. The edge of the inner end of the outer sleeve portion is preferably formed to be cutting so that the fastener can bore into the insulation material as it is rotated.

In the fastening system the fastener, screw and installation tool are arranged so that when the screw is rotated with the installation tool, the fastener and the screw rotate simultaneously, boring into the insulation, and as the screw is rotated into the frame it pulls the inner end of the fastener to contact the frame.

The fastening system can additionally comprise a bushing installed inside the fastener, in which fastening system the fastener, the screw and the installation tool are arranged so that when the installation tool is used for rotating the screw inside the bushing, the fastener and the screw rotate simultaneously, boring into the insulation with the bushing, and as the screw is rotated into the frame, it pulls the fastener and the bushing downwards, fastening the screw finally in place, after which the fastener is rotated until its inner end contacts the frame.

### Figures

In the following the invention is disclosed in more detail by means of example, referring to the appended figures, in which
figure 1 shows the fastening of thin insulation to a frame by means of a fastener according to the invention, and
figure 2 shows the fastening of thick insulation to a frame by means of a fastener according to the invention.

### Detailed description of the invention

The method of installing insulation by means of a fastener, the fastener and the fastening system are now disclosed in detail with reference to the above-mentioned figures. However, none of the disclosed solutions limit the use of the invention in other suitable implementations.

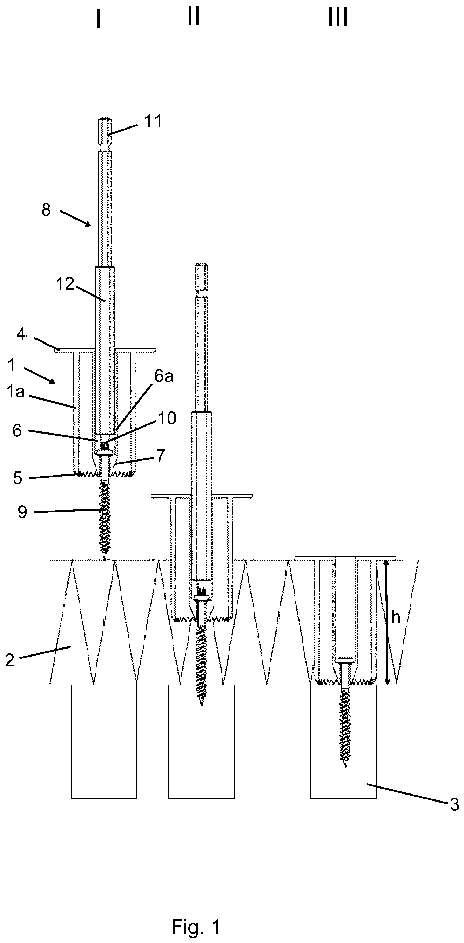

Figure 1 illustrates how a thin insulation 2 is fastened to frame 3 by means of fastener 1. The frame 3 can be made of wood or other suitable material, such as concrete, building block or brick. The fastener 1 can also be called a screw spacer. The cross-section of the fastener 1 is round. The outer end of the fastener 1 is provided with an asymmetrically round collar 4 extending past the outer wall of the outer sleeve portion 1a of the fastener, the collar being preferably round at its one side and essentially straight at its other side, whereby it is possible to fasten the insulation 2 by means of the fastener 1 near a window or door frame. The collar 4 secures the insulation against being removed from the substrate. The inner i.e. lower edge of the outer wall of the sleeve portion 1a of the fastener 1 is provided with serrated teeth 5, cutting a clean hole of correct size into the insulation 2 when the fastener 1 is rotated. The height h of the fastener 1 from the lower edge of the collar 4 to the lower i.e. inner edge of the fastener 1 corresponds to the height of the insulation 2. An inner sleeve portion 6a extending from the outer end of the fastener 1 to the inner end thereof is located in the center of the fastener 1, at a distance from the outer sleeve portion, the sleeve portion being located in the center of the hollow fastener 1 and having an inner space 6. The inner sleeve portion 6a tapers downwards by its inner end, i.e. the lower end 7. The tapered lower end 7 of the sleeve portion 6a ensures that the head of the screw 9 does not fit through the lower part of the inner sleeve portion 6 of the fastener 1, whereby the screw 9 fixes the fastener 1 strongly to the frame 3. The shape of the inner space 6 of the inner sleeve portion 6a is angular, such as hexagonal or square. In figure 1, the height of the wall of the inner sleeve portion 6a is from the upper i.e. outer end of the fastener 1 to the lower i.e. inner end of the fastener 1. It is, however, possible to vary the height of the inner sleeve portion 6a as necessary, for example so that the height of the inner sleeve portion 6a is half of the height h of the fastener 1.

Figure 1 also illustrates an installation tool 8, the exterior shape of which is arranged to correspond, along at least a part of the height of the installation tool 8, to the shape of the inner space 6 of the inner sleeve portion 6a along at least a part of the height of the inner sleeve portion 6a, whereby the installation tool 8 fits inside the inner sleeve portion 6. Thereby the inner space 6 of the inner sleeve 6a is shaped along at least a part of its height to be similar to the outer surface of the body part 12 of the installation tool 8. It is possible to use commonly marketed screws as the screw 9, such as slotted, Phillips or Allen head screws. The tip 10 of the installation tool 8 and the groove of the head of the screw 9 are compatible, whereby the tip 10 fits the groove of the screw 9. When rotating the screw 9 with the installation tool 8, the fastener 1 also rotates at the same speed and in the same direction. This is due to the fact that the outer surface of the body part 12 of the installation tool 8 is arranged to snugly fit in the hole, i.e the inner space 6 of the sleeve portion 6a in the fastener 1. When the tip 10 of the installation tool 8 is contacting the screw 9 and the installation tool 8 is rotated, the screw 9 rotates and simultaneously also the fastener 1 rotates. The upper end 11 itself of the installation tool 8 is provided with an end suitable for grabbing and rotating, or the said end is shaped so that commonly used rotating tools, such as a battery-powered drill, can be attached thereto.

Figure 1 illustrates the fastening of a thin insulation 2 in steps I to III to frame 3 using the fastener 1. Step I shows the initial situation, in which the insulation 2 is on the frame 3 and screw 9 is located inside the inner sleeve portion 6a located inside the fastener 1, the screw being shown at the bottom of the fastener 1. The screw 9 of the fastener 1 can be short or so long that it extends through the insulation 2 before the fastener 1 contacts the insulation 2. Additionally, the fastener 1 is provided with an installation tool 8, the tip 10 of which engages the head of the screw 9.

In step II, the screw 9 and simultaneously the fastener 1 is rotated using the installation tool 8. The tool can be rotated with one hand, whereby the other hand is free to keep the insulation 2 in place. When the screw 9 is rotated, the screw 9 and the lower end of the fastener 1 penetrate the insulation 2. The serrated teeth 5 located at the lower end of the fastener 1 cut a hole of correct size in the insulation 2. When the screw 9 is rotated further, the screw 9 rotates to contact the frame 3 and simultaneously it pulls the fastener 1 through insulation 2 to contact the frame 3.

Step III shows a finished installation, in which the screw 9 has fixed the fastener 1 closely against the frame 3 and the installation tool 8 has been removed from the inner sleeve portion of the fastener 1. The collar 4 located at the upper end of the fastener 1 sits neatly over the upper edge of the insulation 2, preventing the insulation from coming loose.

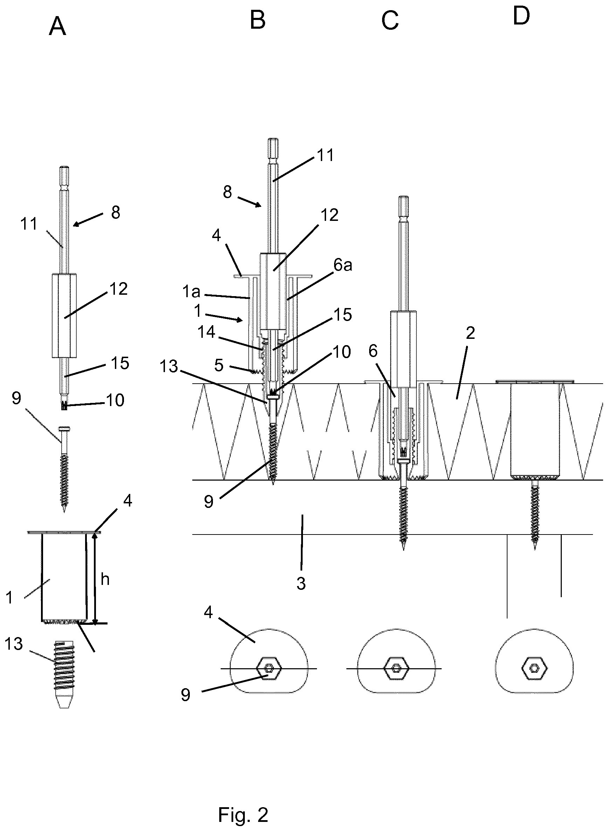

Figure 2 shows the fastening of thick insulation 2 to frame 3 by means of fastener 1. The fastening system comprises a fastener 1, in the center of which there is a sleeve portion 6a formed inside the hollow fastener 1. The height of the sleeve portion 6a can be varied as necessary.

The fastening system additionally comprises a bushing 13 inside the fastener 1, the lower end of which tapers downwards. The bushing 13 allows fastening a thick insulation 2 without long screws 9, whereby the screw lengths do not increase excessively. Thus, similar screws 9 can be used for fastening a thick insulation 2 as for fastening a thin insulation 2. From halfway along the fastener 1, the inner sleeve portion 6a tapers downwards in a stepped manner so that the narrower lower part of the inner sleeve portion 6a of the fastener 1 is provided with grooves 14 arranged in the threads of the bushing 13, allowing screwing the bushing 13 into the grooves 14. The bushing 13 can be screwed into the grooves 14 at a desired height, whereby the lower end of the bushing 13 can be inside or outside the fastener 1, or level with the lower end of the fastener 1.

The fastening system also comprises an installation tool 8. The installation tool 8 is shaped along at least a part of the height of the installation tool 8 to correspond to the shape of the inner space 6 of the inner sleeve portion 6a along at least a part of its height. Figure 2 shows that the body part 12 of the installation tool 8 fits perfectly into the upper end of the sleeve portion 6a. Preferably, the hole is square or hexagonal in shape. The installation tool 8 has a lower part 15, lengthening the installation tool 8, whereby the tip 10 of the installation tool 8 reaches the screw 9 at the bottom of the bushing 13 without difficulty.

Figure 2 illustrates the installation of thick insulation 2 to frame 3 using the fastener 1 with steps A to D Step A shows the initial situation, in which all parts of the fastening system are shown above each other in installation order. The fastening system comprises an installation tool 8, screw 9, fastener 1 and bushing 13.

Step B shows the insulation 2 installed on the frame 3. First a screw 9 is installed in a bushing 13 attached in the hole 6 inside the fastener 1, and then the installation tool 8 is inserted. The lower end 15 of the installation tool 8 is so long that it is possible to rotate the screw 9 inside the bushing 13. When the tip 10 of the installation tool 8 engages the head of the screw 9 and the installation tool 8 is rotated, the screw 9 rotates with fastener 1 rotating simultaneously in the same direction at the same speed. When the screw 9 is rotated, the screw 9 and the tip of the bushing 13 inside the fastener 1 penetrate through the insulation 2 and the screw 9 rotates to engage the frame 3.

In step C the screw 9 is rotated further, whereby the serrated teeth 5 at the lower end of the fastener 1 cut a hole of correct size in the insulation 2 and the screw 9 pulls the fastener 1 partially inside insulation 2. As the screw 9 is rotated further, the tip 13 of the bushing contacts the frame 3, whereby the installation tool 8 cannot be rotated further, and the screw 9 is finally fixed into place. The tip 10 of the installation tool 8 is then removed from the screw 9 and the fastener 1 is rotated by means of the installation tool 8 until the lower end of the fastener 1 contacts the frame 3. When the fastener 1 is rotated, the bushing 13 inside the fastener rotates simultaneously upwards in the grooves 14 inside the fastener 1. In the final stage both the lower part of the fastener 1 and the lower part of the bushing 13 contact the frame 3. Thereby the fastener is in the installed state of step C. Alternatively, the bushing 13 can be left at a distance from the frame 3 when the screw is rotated. Thereby only the lower part of the fastener 1 contacts the frame 3, and the bushing 13 is inside the fastener 1.

Step D shows a finished installation, in which the screw 9 has fixed the bushing 13 and the lower end of the fastener 1 closely against the frame 3 and the installation tool 8 has been removed from the hole at the upper part of the fastener 1. Bushing 13 remains inside the fastener 1. The collar 4 at the upper end of the fastener 1 sits neatly over the upper end of the insulation 2. The bottom section of figure 2 additionally shows the steps B to D as seen from above. The shape of the collar is round, with one side flattened.

Using the solutions according to the invention greatly improves the installability of the insulation. The insulation can be installed quickly and a single installer can carry out the installation. The fastener according to the invention allows the use of shorter screws also with thick insulation. Rotating long screws into wood requires lots of power from the drills. The fasteners are robust and do not break even if they are stepped on.

## Claims

1. A fastener (1) for fastening an insulation (2) to a frame structure (3), the fastener having an outer end and an inner end and comprising
- an outer sleeve portion (1a); and
- a concentric inner sleeve portion (6a) located at a distance from the outer sleeve portion, the inner sleeve portion allowing installation of a screw (9) and installation tool (8) thereto, the shape of which along at least a part of the height of the installation tool (8) is capable of being arranged to correspond to the angular shape of the inner space (6) of the inner sleeve portion (6a) along at least a part of its height so that when the screw (9) is rotated with the installation tool (8), the fastener (1) and the screw (9) rotate simultaneously;
- a collar (4) connecting the outer ends of the outer sleeve portion (1a) and the inner sleeve portion (6a), **characterized in that** the length of the fastener is defined by the length (h) of the outer sleeve portion (1a) and the thickness of the collar (4).

2. A fastener (1) according to claim 1, **characterized in that** the edge of the inner end of the outer sleeve portion (1a) is shaped to be cutting.

3. A fastener (1) according to claim 2, **characterized in that** the edge of the inner end of the outer sleeve portion (1a) of the fastener comprises teeth (5).

4. A fastener (1) according to any of claims 1 to 3, **characterized in that** the fastener (1) additionally comprises a bushing (13) installed in the inner space (6) of the inner sleeve portion (6a) of the fastener (1), into which bushing the screw (9) can be installed.

5. A fastener (1) according to any of claims 1 to 4, **characterized in that** the inner space (6) of the inner sleeve portion (6a) of the fastener (1) is square or hexagonal in shape along at least part of the height (h) of the fastener (1).

6. A fastener (1) according to any of claims 1 to 5, **characterized in that** the height (h) of the fastener (1) corresponds to the height of the insulation (2) to be installed.

7. A method of fastening an insulation (2) to a frame (3) using a fastener (1) according to claim 1, **characterized in that** in the method:
- a screw (9) and an installation tool (8) are installed in the inner space (6) of the inner sleeve portion at the center of the fastener (1), the external shape of the installation tool being arranged to correspond at least along a part of the height of the installation tool (8) with the shape of the inner space (6) along at least a part of the height of the inner space (6);
- the screw (9) is rotated with the installation tool (8), whereby the fastener (1) and the screw (9) rotate simultaneously, boring into the insulation (2); and
- as the screw (9) is rotated into the frame (3), it pulls the inner end of the fastener (1) to contact the frame (3).

8. A method of fastening an insulation (2) to a frame (3) using a fastener (1) according to claim 4, **characterized in that** in the method:
the screw (9) inside the bushing (13) is rotated with the installation tool (8), whereby the fastener (1) and the screw (9) rotate simultaneously, boring into the insulation (2) with the bushing (13); and
as the screw (9) is rotated into the frame (3), it pulls the fastener (1) and the bushing (13) downwards, fixing the screw (9) finally into place, after which the fastener (1) is rotated until its lower part contacts the frame (3).

9. A fastening system, comprising a screw (9), an installation tool (8) and a fastener (1) according to any of claims 1 to 6, the external shape of the installation tool being arranged to correspond along at least a part of the height of the installation tool (8) to the shape of the inner space (6) of the inner sleeve of the fastener along at least a part of the height of the inner space (6).

## Patentansprüche

1. Befestigungselement (1) zum Befestigen einer Isolierung (2) an einer Rahmenstruktur (3), wobei das Befestigungselement ein Außenende und ein Innenende aufweist und umfasst
- einen äußeren Mantelabschnitt (1a); und
- einen konzentrischen inneren Mantelabschnitt (6a), der bei einem Abstand vom äußeren Mantelabschnitt liegt, wobei der innere Mantelabschnitt Installation einer Schraube (9) und eines Installationswerkzeugs (8) daran gestattet, wobei dessen Form entlang mindestens eines Teils der Höhe des Installationswerkzeugs (8) eingerichtet werden kann, um der Winkelform des Innenraums (6) des inneren Mantelabschnitts (6a) entlang mindestens eines Teils seiner Höhe zu entsprechen, sodass, wenn die Schraube (9) mit dem Installationswerkzeug (8) gedreht wird, das Befestigungselement (1) und die Schraube (9) sich gleichzeitig drehen;
- einen Bund (4), der die äußeren Enden des äußeren Mantelabschnitts (1a) und des inneren Mantelabschnitts (6a) verbindet, **dadurch gekennzeichnet, dass** die Länge des Befestigungselements durch die Länge (h) des äußeren Mantelabschnitts (1a) und die Dicke des Bunds (4) definiert ist.

2. Befestigungselement (1) nach Anspruch 1, **dadurch gekennzeichnet, dass** der Rand des Innenendes des äußeren Mantelabschnitts (1a) geformt ist, schneidend zu sein.

3. Befestigungselement (1) nach Anspruch 2, **dadurch gekennzeichnet, dass** der Rand des Innenendes des äußeren Mantelabschnitts (1a) des Befestigungselements Zähne (5) umfasst.

4. Befestigungselement (1) nach einem der Ansprüche 1 bis 3, **dadurch gekennzeichnet, dass** das Befestigungselement (1) zusätzlich eine Hülse (13) umfasst, die im Innenraum (6) des inneren Mantelabschnitts (6a) des Befestigungselements (1) installiert ist, in welche Hülse die Schraube (9) installiert werden kann.

5. Befestigungselement (1) nach einem der Ansprüche 1 bis 4, **dadurch gekennzeichnet, dass** der Innenraum (6) des inneren Mantelabschnitts (6a) des Befestigungselements (1) entlang mindestens eines Teils der Höhe (h) des Befestigungselements (1) quadratisch oder hexagonal geformt ist.

6. Befestigungselement (1) nach einem der Ansprüche 1 bis 5, **dadurch gekennzeichnet, dass** die Höhe (h) des Befestigungselements (1) der Höhe der zu installierenden Isolierung (2) entspricht.

7. Verfahren zum Befestigen einer Isolierung (2) an einem Rahmen (3) unter Verwendung eines Befestigungselements (1) nach Anspruch 1, **dadurch gekennzeichnet, dass** im Verfahren:
- eine Schraube (9) und ein Installationswerkzeug (8) im Innenraum (6) des inneren Mantelabschnitts beim Mittelpunkt des Befestigungselements (1) installiert sind, wobei die Außenform des Installationswerkzeugs eingerichtet ist, mindestens entlang eines Teils der Höhe des Installationswerkzeugs (8) der Form des Innenraums (6) entlang mindestens eines Teils der Höhe des Innenraums (6) zu entsprechen;
- die Schraube (9) mit dem Installationswerkzeug (8) gedreht wird, wodurch das Befestigungselement (1) und die Schraube (9) sich in die Isolierung (2) bohrend, gleichzeitig drehen; und
- wenn die Schraube (9) in den Rahmen (3) gedreht wird, sie das Innenende des Befestigungselements (1) in Kontakt mit dem Rahmen (3) anzieht.

8. Verfahren zum Befestigen einer Isolierung (2) an einem Rahmen (3) unter Verwendung eines Befestigungselements (1) nach Anspruch 4, **dadurch gekennzeichnet, dass** im Verfahren:
die Schraube (9) innerhalb der Hülse (13) mit dem Installationswerkzeug (8) gedreht wird, wodurch das Befestigungselement (1) und die Schraube (9) sich mit der Hülse (13) in die Isolierung (2) bohrend, gleichzeitig drehen; und
wenn die Schraube (9) in den Rahmen (3) gedreht wird, sie das Befestigungselement (1) und die Hülse (13) nach unten zieht, um die Schraube (9) schließlich in Position zu fixieren, wonach das Befestigungselement (1) gedreht wird, bis sein unterer Teil mit dem Rahmen (3) in Kontakt ist.

9. Befestigungssystem, umfassend eine Schraube (9), ein Installationswerkzeug (8) und ein Befestigungselement (1) nach einem der Ansprüche 1 bis 6, wobei die Außenform des Installationswerkzeugs eingerichtet ist, entlang mindestens eines Teils der Höhe des Installationswerkzeugs (8) der Form des Innenraums (6) des inneren Mantels des Befestigungselements entlang mindestens eines teils der Höhe des Innenraums (6) zu entsprechen.

## Revendications

1. Élément de fixation (1) pour fixer une isolation (2) à une structure de charpente (3), l'élément de fixation ayant une extrémité extérieure et une extrémité intérieure et comprenant :
- une portion manchon extérieure (1a) ; et
- une portion manchon intérieure concentrique (6a) située à une distance de la portion manchon extérieure, la portion manchon intérieure permettant l'installation d'une vis (9) et d'un outil d'installation (8) sur celle-ci, dont la forme, le long d'au moins une partie de la hauteur de l'outil d'installation (8), est capable d'être agencée pour correspondre à la forme angulaire de l'espace intérieur (6) de la portion manchon intérieure (6a) le long d'au moins une partie de sa hauteur pour que, lorsque la vis (9) est tournée avec l'outil d'installation (8), l'élément de fixation (1) et la vis (9) tournent simultanément ;
- un collier (4) raccordant les extrémités extérieures de la portion manchon extérieure (1a) et de la portion manchon intérieure (6a), **caractérisé en ce que** la longueur de l'élément de fixation est définie par la longueur (h) de la portion manchon extérieure (1a) et l'épaisseur du collier (4).

2. Élément de fixation (1) selon la revendication 1, **caractérisé en ce que** le bord de l'extrémité intérieure de la portion manchon extérieure (1a) est formé pour être tranchant.

3. Élément de fixation (1) selon la revendication 2, **caractérisé en ce que** le bord de l'extrémité intérieure de la portion manchon extérieure (1a) de l'élément de fixation comprend des dents (5).

4. Élément de fixation (1) selon l'une quelconque des revendications 1 à 3, **caractérisé en ce que** l'élément de fixation (1) comprend de plus une douille (13) installée dans l'espace intérieur (6) de la portion manchon intérieure (6a) de l'élément de fixation (1), dans laquelle douille la vis (9) peut être installée.

5. Élément de fixation (1) selon l'une quelconque des revendications 1 à 4, **caractérisé en ce que** l'espace intérieur (6) de la portion manchon intérieure (6a) de l'élément de fixation (1) est de forme carrée ou hexagonale le long d'au moins une partie de la hauteur (h) de l'élément de fixation (1).

6. Élément de fixation (1) selon l'une quelconque des revendications 1 à 5, **caractérisé en ce que** la hauteur (h) de l'élément de fixation (1) correspond à la hauteur de l'isolation (2) destinée à être installée.

7. Procédé de fixation d'une isolation (2) à une charpente (3) en utilisant un élément de fixation (1) selon la revendication 1, **caractérisé en ce que**, dans le procédé :
- une vis (9) et un outil d'installation (8) sont installés dans l'espace intérieur (6) de la portion manchon intérieure au centre de l'élément de fixation (1), la forme externe de l'outil d'installation étant agencée pour correspondre, au moins le long d'une partie de la hauteur de l'outil d'installation (8), à la forme de l'espace intérieur (6) le long d'au moins une partie de la hauteur de l'espace intérieur (6) ;
- la vis (9) est tournée avec l'outil d'installation (8), moyennant quoi l'élément de fixation (1) et la vis (9) tourne simultanément, forant dans l'isolation (2) ; et
- lorsque la vis (9) est tournée dans la charpente (3), elle tire l'extrémité intérieure de l'élément de fixation (1) pour entrer en contact avec la charpente (3).

8. Procédé de fixation d'une isolation (2) à une charpente (3) en utilisant un élément de fixation (1) selon la revendication 4, **caractérisé en ce que**, dans le procédé :
la vis (9) à l'intérieur de la douille (13) est tournée avec l'outil d'installation (8), moyennant quoi l'élément de fixation (1) et la vis (9) tournent simultanément, forant dans l'isolation (2) avec la douille (13) ; et
lorsque la vis (9) est tournée dans la charpente (3), elle tire l'élément de fixation (1) et la douille (13) vers le bas, fixant la vis (9), pour finir, en place, après quoi l'élément de fixation (1) est tourné jusqu'à ce que sa partie inférieure entre en contact avec la charpente (3).

9. Système de fixation, comprenant une vis (9), un outil d'installation (8) et un élément de fixation (1) selon l'une quelconque des revendications 1 à 6, la forme externe de l'outil d'installation étant agencée pour correspondre, le long d'au moins une partie de la hauteur de l'outil d'installation (8), à la forme de l'espace intérieur (6) du manchon intérieur de l'élément de fixation le long d'au moins une partie de la hauteur de l'espace intérieur (6).
